# EUROPEAN PATENT SPECIFICATION

(11) **EP 0 501 590 B1**
(45) Date of publication and mention of the grant of the patent: **20.12.1995**
(21) Application number: 92200580.6
(22) Date of filing: 28.02.1992
(51) Int. Cl.: B07B 1/14, B07B 13/07

(54) **A bulk bin for agricultural products**
Schüttvorrichtung für Landwirtschaftsprodukte
Trémie pour des produits agricoles

(30) Priority: 28.02.1991 NL 9100377
(43) Date of publication of application: 02.09.1992
(73) Proprietor: Zijlstra & Bolhuis B.V., NL-9645 LA Veendam (NL)
(72) Inventor: Middel, Jan, NL-9468 HL Annen (NL)
(74) Representative: Smulders, Theodorus A.H.J., Ir.

(56) References cited:
- EP-A- 0 101 637
- EP-A- 0 399 614
- DE-A- 3 027 651
- FR-A- 2 149 787
- GB-A- 309 374
- NL-A- 8 901 285
- US-A- 3 217 346

## Description

This invention relates to a bulk bin according to the preamble of claim 1.

Such a bulk bin is known from European patent specification 0 101 637. In the known bulk bin, the cleaning device is designed as a roller screen in alignment with the adjacent end of the conveyor bottom. The agricultural products fall off the end of the conveyor bottom onto the roller screen, are cleaned while passing the roller screen and after passing the roller screen fall onto a discharge conveyor extending transversely to the direction of transport of the conveyor bottom and the roller screen. Disposed underneath the roller screen is a similar discharge conveyor, though intended for the discharge of the material that has fallen through the roller screen, such as leaves, earth, etc.

The assembly of conveyor bottom with associated sidewalls, cleaning device, discharge conveyors for dirt or agricultural products is mounted on a single, preferably mobile, underframe.

In some situations, it is desirable for the agricultural products such as potatoes to be cleaned more thoroughly and/or to be fed to a sorting unit or to be graded according to size directly after cleaning. In that case, usually a separate device is employed for this purpose, which is coupled to the cleaning device to enable the agricultural products to be subjected to the desired additional treatment directly after cleaning.

A drawback of this technique is that two separate machines are required, viz. the bulk bin and the separate device, each of which have an underframe of their own and must be moved separately if the bulk bin is moved. The additional device also requires additional storage space.

In US-A-3 217 346 an apparatus is described which comprises a conveyor bottom and first and second processing devices downstream of the conveyor bottom and upstream of a chute for discharging processed products. Products passing from the conveyor bottom to the discharging chute are invariably subjected to two processing phases before reaching the chute.

It is an object of the invention to overcome these drawbacks and particularly to provide a bulk bin for universal and flexible use performing optionally one or two processing steps. To that end, according to the invention, a bulk bin of the type described is characterized by the characterizing features of claim 1.

One embodiment of the invention will now be described, by way of example, with reference to the accompanying drawings, in which:
Fig. 1 is a schematic side elevation of an example of a known bulk bin;
Fig. 2 is a schematic cutaway side elevation of an embodiment of a bulk bin according to the invention; and
Fig. 3 is a schematic top plan view of an embodiment of an additional processing device suitable for use in a bulk bin apparatus according to the invention.

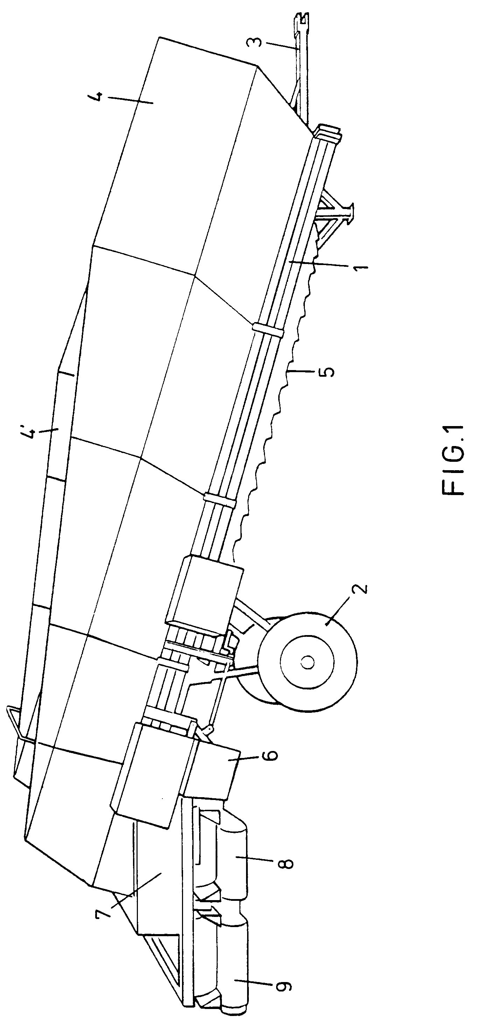

The known bulk bin shown schematically in side elevation in Fig. 1 comprises a frame 1, which is mobile owing to the provision of wheels 2 and a drawbar 3. The bulk bin proper is formed by upright sidewalls 4,4', between which is disposed an endless conveyor bottom having an upwardly slanting elevation path and a bottom return run, indicated at 5. The conveyor bottom is driven by a drive unit 6, which is arranged adjacent to the upper end of the elevation path. Disposed beyond the upper end of the elevation path is a cleaning device, for instance a roller screen unit, diagrammatically shown at 7. Arranged underneath the roller screen unit is a transverse conveyor 8 for discharging the material that has passed through the roller screen unit. In operation, the rollers of the roller screen unit are driven in such a manner that the products are conveyed by the rollers to a second transverse conveyor 9, capable of transporting the products further.

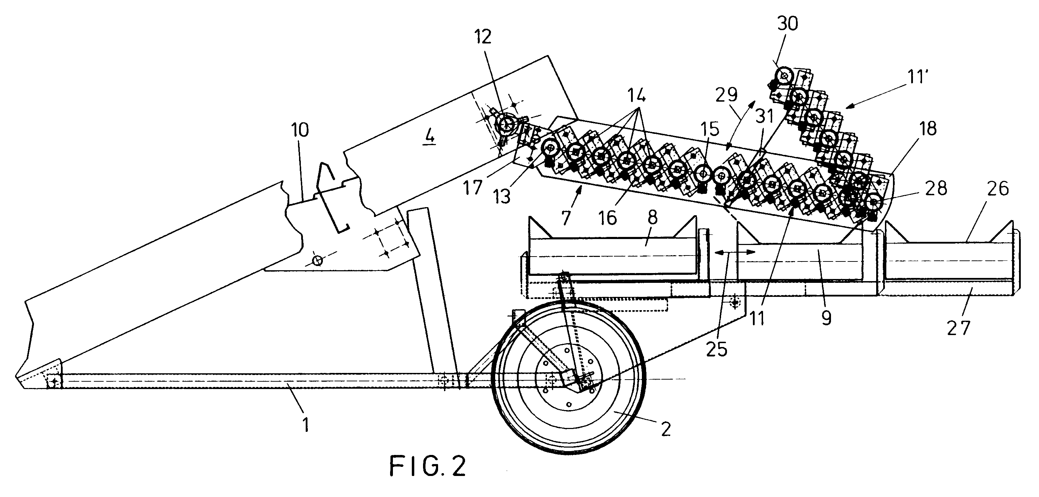

Fig. 2 shows a diagrammatic cutaway side-elevational view of an embodiment of a bulk bin according to the invention. More particularly, Fig. 2 shows the roller screen unit 7 adjacent to the upper part of the conveyor bottom 10, this unit 7 in turn having an additional processing device 11 connecting thereto.

Disposed at 12 is an upper return roller for the conveyor bottom 10. Beyond the upper return roller, the products supplied by the conveyor bottom fall onto the roller screen unit 7 or any other suitable processing device. In the embodiment shown, the roller screen unit comprises seven rollers 13, 14, 15 which extend transversely to the direction of transport of the conveyor bottom and are mounted in a linkage 16 in a known manner. A suitable roller screen unit is disclosed for instance in European patent specification 0 101 637.

The first roller 13 of the roller screen unit is mounted between two mounting plates, one of which is shown at 17. Mounted on the mounting plates are also schematically indicated frame members 18 for the roller screen unit.

According to the invention, the frame members 18 extend beyond the last roller 15 of the roller screen unit and thereby form an extended frame. The extended frame can be formed simply by using longer frame members 18. Alternatively, the extended frame can be obtained by attaching a separate auxiliary frame to the frame members of the roller screen unit.

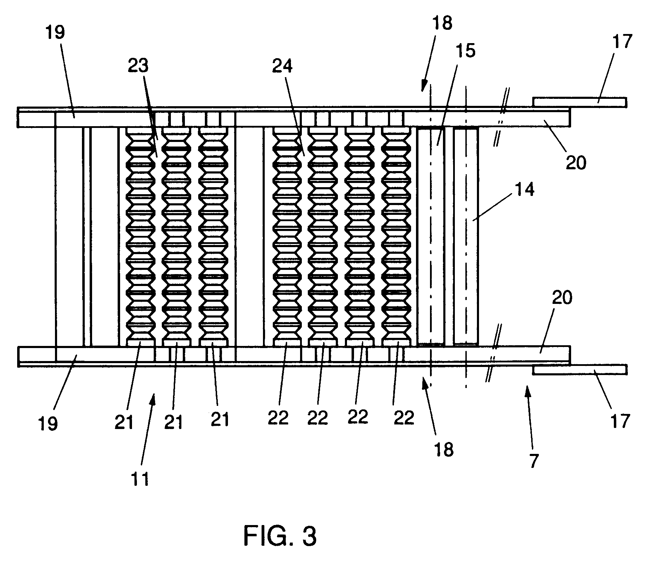

The extended frame 18 carries an additional processing device 11, mounted beyond the roller screen unit and adjacent thereto. The additional processing device 11 can also be a cleaning apparatus, for instance a roller screen unit, or an (electronic) sorting unit, but may also be a (pre)grading apparatus. An example of a suitable grading apparatus is disclosed in Netherlands patent application 8901285 and is diagrammatically shown in Fig. 3.

Fig. 3 is a schematic top plan view of the longitudinal girders of the extended frame 18. Two rollers 14, 15 of the roller screen unit 7 are shown. Disposed downstream of roller 15 is the grading apparatus 11, the embodiment shown being of the type of square size grading apparatus having two longitudinal girders 19 which are in line with the longitudinal girders 20 of the roller screen unit 7 and which, together with the longitudinal girders 20, form at least partly the extended frame 18. In the embodiment shown, the square size grading apparatus comprises two sets of profiled rollers 21 and 22, each set forming a plurality of grading openings 23, 24, respectively.

The material falling through the additional processing device, which material may be waste material or (pre)graded products, can be discharged using the transverse conveyor 9 that is present anyway. The conveyor 9 can be advantageously mounted for shifting movement, as schematically indicated with an arrow 25, so that the position of the conveyor 9 can be adjusted depending on the presence and the nature of the additional processing device.

Arranged beyond the conveyor 9 is further a transversely disposed belt conveyor 26 serving to carry off products which have passed the additional processing device. The belt conveyor 26 is mounted on extended parts 27 of the part of frame 1 that carries the conveyors 8 and 9. Advantageously, the belt conveyor 26 can also be displaced in the direction of transport of the conveyor bottom, independently of the belt conveyor 9 or not.

It is not always necessary to use an additional processing device. A first charge of potatoes to be processed may for instance have a great deal of soil adhering to them, so that additional cleaning is required, while a subsequent charge of potatoes, grown on a different type of soil, for instance, may not require additional cleaning. Likewise, pregrading is not always required.

For that reason, the additional processing device is preferably mounted in such a way that it can be put out of use in a simple manner, requiring also that the additional processing device is moved out of the path of the products. It is also possible to mount the additional processing device on the girders 20 and/or the extended frame 18 in a manner permitting rapid demounting thereof.

In the embodiment shown in Fig. 2, the additional processing device is mounted for pivotal motion. More particularly, in the embodiment shown the additional processing device is mounted for pivotal movement about a pivotal axis 28 extending transversely to the direction of transport of the conveyor bottom at the free end of the extended frame 18.

In Fig. 2 the upwardly pivoted position of the additional processing device is shown diagrammatically with broken lines at 11'. The swivelling movement is indicated with an arrow 29.

Advantageously, the pivotal axis 28 coincides with the axis of rotation of the last roller of the unit, but this is not a requisite.

The additional processing device may comprise a subframe, indicated schematically with the line 30, resting on the extended frame 18 in the operative position.

The extended frame 18 can be mounted on the mounting plates 17 in a self-supporting manner, but, if so desired, it may be further supported, spaced from the mounting plates 17, for instance adjacent the free end, by struts (not shown), which are mounted on the frame 1. Such struts may for instance be mounted on the part of the frame that carries the conveyors 8, 9, 26. It is even conceivable that the additional processing device is entirely mounted on the frame using suitable mounting elements.

The mounting plates can be mounted so as to permit adjustment of the height of drop of the products which fall from the conveyor bottom onto the unit 7. Such a construction is for instance disclosed in Netherlands patent application 8902907.

Further, operating means may be provided for swivelling the additional processing device up and down. The operating means may for instance comprise a screw spindle which is operable by a crank or a hydraulic or pneumatic cylinder, as schematically indicated at 31.

By using an additional processing device, the range of use of a bulk bin is enlarged and the necessity of coupling a separate device with an underframe of its own is avoided.

Designing the additional device in a manner permitting it to be put out of use in a simple manner moreover enables highly flexible use of the bulk bin at relatively low cost. Further, when displacing a bulk bin according to the invention, a single drawing vehicle and a single ride will suffice, whereas a separate additional device would necessitate a second drawing vehicle and a second ride.

## Claims

1. A bulk bin for agricultural products, comprising a frame (1), a conveyor bottom (10) mounted on the frame, a first processing device (7), and a transverse conveyor (8) mounted beyond the first processing device (7), while the conveyor bottom (10) is capable of feeding agricultural products via a discharge end to the first processing device (7) which is also mounted on the frame and extends substantially in line with the direction of transport of the conveyor bottom (10) forming a path for the agricultural products and the transverse conveyor (9) in operation carries off products which have passed the first processing device, characterized by a second processing device (11) mounted on the frame beyond the first processing device (7), adjacent thereto, in line therewith, and movable out of the path for the agricultural products.

2. A bulk bin according to claim 1, characterized in that beyond the second processing device an additional transverse conveyor (26) is arranged for carrying off products which have passed the second processing device (11).

3. A bulk bin according to claim 1 or 2, characterized in that the first processing device (7) comprises frame members (18) extending in the direction of transport of the products and that the second processing device (11) comprises frame members (19) extending at least in operation in alignment therewith.

4. A bulk bin according to claim 3, characterized in that the frame members (18, 19) of the first and second processing devices (7, 11) are mounted in self-supporting manner adjacent the end of the conveyor bottom.

5. A bulk bin according to any one of claims 1 3, characterized in that the second processing device (11) is at least partly supported by members of the frame via mounting members.

6. A bulk bin according to claim 5, characterized in that said members of the frame (1) also carry the transverse conveyor(s) (8, 9, 26).

7. A bulk bin according to any one of the preceding claims, characterized in that the second processing device (11) can be moved up and down relative to an axis extending transversely to the direction of transport of the conveyor bottom (10) and located adjacent the free end of the additional processing device.

8. A bulk bin according to claim 7, characterized in that the second processing device (11) has a subframe pivotally coupled to frame members (18) extending in line with the first processing device (7).

9. A bulk bin according to any one of the preceding claims, characterized in that the first processing device (7) is a roller screen unit and the second processing device (11) is also a roller screen unit.

10. A bulk bin according to any one of claims 1-8, characterized in that the first processing device (7) is a roller screen unit and the second processing device (11) is a (pre)grading device.

11. A bulk bin according to any one of the preceding claims, characterized in that the transverse conveyor (9) is mounted for shifting movement in the longitudinal direction of the bulk bin.

12. A bulk bin according to any one of claims 2-11, characterized in that the additional transverse conveyor (26) is mounted for shifting movement in the longitudinal direction of the bulk bin.

13. A bulk bin according to any one of the preceding claims, characterized in that the second processing device (11) is a sorting unit.

## Patentansprüche

1. Schüttvorrichtung für Landwirtschaftsprodukte, versehen mit einem Gestell (1), einem an dem Gestell montierten Förderboden (10), einer ersten Behandlungsvorrichtung (7) und einen hinter der ersten Behandlungsvorrichtung (7) montierten Querförderer (8), wobei der Förderboden (10) über ein Abfuhrende Landwirtschaftsprodukte der ersten Behandlungsvorrichtung (7) zuführen kann, die ebenfalls an den Gestell montiert ist und sich im wesentlichen fluchtend mit der Transportrichtung des Förderbodens (10) erstreckt, wobei eine Bahn für die Landwirtschaftsprodukte gebildet wird, und der Querförderer (9) im Betrieb Produkte abführt, die die erste Behandlungsvorrichtung passiert sind, gekennzeichnet durch eine zweite Behandlungsvorrichtung (11), die hinter der ersten Behandlungsvorrichtung (7), dieser benachbart und mit dieser fluchtend, an dem Gestell montiert ist und aus der Bahn für die Landwirtschaftsprodukte bewegbar ist.

2. Schüttvorrichtung nach Anspruch 1, dadurch gekennzeichnet, daß hinter der zweiten Behandlungsvorrichtung ein zusätzlicher Querförderer (26) zum Abführen von Produkten, die die zweite Behandlungsvorrichtung (11) passiert sind, angeordnet ist.

3. Schüttvorrichtung nach Anspruch 1 oder 2, dadurch gekennzeichnet, daß die erste Behandlungsvorrichtung (7) sich in Transportrichtung der Produkte erstreckende Gestellteile (18) aufweist und daß die zweite Behandlungsvorrichtung (11) sich wenigstens im Betrieb mit dieser fluchtend erstreckende Gestellteile (19) aufweist.

4. Schüttvorrichtung nach Anspruch 3, dadurch gekennzeichnet, daß die Gestellteile (18, 19) der ersten und zweiten Behandlungsvorrichtungen (7, 11) freitragend den Ende des Förderbodens benachbart befestigt sind.

5. Schüttvorrichtung nach einem der Ansprüche 1 bis 3, dadurch gekennzeichnet, daß die zweite Behandlungsvorrichtung (11) mindestens teilweise über Montageteile auf Teilen des Gestells abgestützt ist.

6. Schüttvorrichtung nach Anspruch 5, dadurch gekennzeichnet, daß die genannten Teile des Gestells (1) auch den (die) Querförderer (8, 9, 26) tragen.

7. Schüttvorrichtung nach einem der vorhergehenden Ansprüche, dadurch gekennzeichnet, daß die zweite Behandlungsvorrichtung (11) relativ zu einer sich quer zur Transportrichtung des Förderbodens (10) erstreckenden und dem freien Ende der zusätzlichen Behandlungsvorrichtung benachbart liegenden Achse auf und nieder bewegbar ist.

8. Schüttvorrichtung nach Anspruch 7, dadurch gekennzeichnet, daß die zweite Behandlungsvorrichtung (11) ein Untergestell aufweist, das schwenkbar an sich mit der ersten Behandlungsvorrichtung (7) fluchtend erstreckende Gestellteile (18) gekuppelt ist.

9. Schüttvorrichtung nach einem der vorhergehenden Ansprüche, dadurch gekennzeichnet, daß die erste Behandlungsvorrichtung (7) eine Rollensiebeinheit ist und daß die zweite Behandlungsvorrichtung (11) ebenfalls eine Rollensiebeinheit ist.

10. Schüttvorrichtung nach einem der Ansprüche 1 bis 8, dadurch gekennzeichnet, daß die erste Behandlungsvorrichtung (7) eine Rollensiebeinheit ist und daß die zweite Behandlungsvorrichtung (11) eine (Vor)sortiervorrichtung ist.

11. Schüttvorrichtung nach einem der vorhergehenden Ansprüche, dadurch gekennzeichnet, daß der Querförderer (9) in Längsrichtung der Schüttvorrichtung verschiebbar montiert ist.

12. Schüttvorrichtung nach einem der Ansprüche 2 bis 11, dadurch gekennzeichnet, daß der zusätzliche Querförderer (26) in Längsrichtung der Schüttvorrichtung verschiebbar montiert ist.

13. Schüttvorrichtung nach einem der vorhergehenden Ansprüche, dadurch gekennzeichnet, daß die zweite Behandlungsvorrichtung (11) eine Sortiereinheit ist.

## Revendications

1. Trémie pour produits agricoles comprenant un châssis (1), un fond transporteur (10) fixé sur le châssis, un premier dispositif de traitement (7) et un transporteur transversal (8) fixé au-delà du premier dispositif de traitement (7) tandis que le fond transporteur (10) est capable d'amener des produits agricoles par l'intermédiaire d'une extrémité d'évacuation au premier dispositif de traitement (7) qui est également fixé sur le châssis et s'étend essentiellement dans le prolongement de la direction de transport du fond transporteur (10) en formant une voie pour les produits agricoles et le transporteur transversal (9) en mouvement transporte des produits qui ont franchi le premier dispositif de traitement, caractérisée par un deuxième dispositif de traitement (11) qui est fixé sur le châssis au-delà du premier dispositif de traitement (7) à côté et dans le prolongement de celui-ci et peut sortir du trajet des produits agricoles.

2. Trémie selon la revendication 1, caractérisée en ce qu'un transporteurs transversal supplémentaire (26) est disposé au-delà du deuxième dispositif de traitement pour transporter des produits qui ont traversé le deuxième dispositif de traitement (11).

3. Trémie selon l'une des revendications 1 ou 2, caractérisée en ce que le premier dispositif de traitement (7) comprend des éléments de châssis (18) s'étendant dans le sens de transport des produits et en ce que le deuxième dispositif de traitement (11) comprend des éléments de châssis (19) s'étendant, du moins en service, dans le prolongement de celui-ci.

4. Trémie selon la revendication 3, caractérisée en ce que les éléments de châssis (18, 19) des premier et deuxième dispositifs de traitement (7, 11) sont fixés de manière autoportante à côté de l'extrémité du fond transporteur.

5. Trémie selon l'une quelconque des revendications 1 à 3, caractérisée en ce que le deuxième dispositif de traitement (11) est soutenu, du moins en partie, par les éléments du châssis par l'intermédiaire d'éléments de fixation.

6. Trémie selon la revendication 5, caractérisée en ce que lesdits éléments du châssis (1) portent également le ou les transporteurs transversaux (8, 9, 26).

7. Trémie selon l'une quelconque des revendications précédentes, caractérisée en ce que le deuxième dispositif de traitement (11) peut être relevé et abaissé par rapport à un axe s'étendant transversalement à la direction de transport du fond transporteur (10) et adjacent à l'extrémité libre du dispositif de traitement supplémentaire.

8. Trémie selon la revendication 7, caractérisée en ce que le deuxième dispositif de traitement (11) possède un sous-châssis raccordé à pivotement à des éléments de châssis (18) s'étendant dans le prolongement du premier dispositif de traitement (7).

9. Trémie selon l'une quelconque des revendications précédentes, caractérisée en ce que le premier dispositif de traitement (7) est une unité de tamisage à rouleaux et le deuxième dispositif de traitement (11) est également une unité de tamisage à rouleaux.

10. Trémie selon l'une quelconque des revendications 1 à 8, caractérisée en ce que le premier dispositif de traitement (7) est une unité de tamisage à rouleaux et le deuxième dispositif de traitement (11) est une unité de (pré-)triage.

11. Trémie selon l'une quelconque des revendications précédentes, caractérisée en ce que le transporteur transversal (9) est fixé pour un mouvement de coulissement dans la direction longitudinale du trémie.

12. Trémie selon l'une quelconque des revendications 2 à 11, caractérisée en ce que le transporteur transversal supplémentaire (26) est fixé pour un mouvement de coulissement dans la direction longitudinale de la trémie.

13. Trémie selon l'une quelconque des revendications précédentes, caractérisée en ce que le deuxième dispositif de traitement (11) est une unité de triage.
